**Europäisches Patentamt**

**European Patent Office**

**Office européen des brevets**

(19)

(11) Veröffentlichungsnummer.

**0 019 013**
**A2**

(12) # EUROPÄISCHE PATENTANMELDUNG

(21) Anmeldenummer: 79104827.5

(22) Anmeldetag: 01.12.79

(51) Int. Cl.³: **G 02 B 27/36**

(30) Priorität: 07.05.79 CH 4234·79

(43) Veröffentlichungstag der Anmeldung:
26.11.80 Patentblatt 80·24

(84) Benannte Vertragsstaaten:
AT DE FR GB IT NL SE

(71) Anmelder: **SIEMENS-ALBIS AKTIENGESELLSCHAFT**
**EGA1/Verträge und Patente Postfach**
**CH-8047 Zürich(CH)**

(72) Erfinder: **Crameri, Roberto**
**Wildbachstrasse 47**
**CH-8008 Zürich(CH)**

(54) **Vorrichtung zum Einbringen einer Bezugsmarke in den Strahlengang von optischen Systemen mit Bildaufnahmeröhren.**

(57) Bei der Vorrichtung wird ein transparenter Träger (1), auf dem eine Bezugsmarke angebracht ist, mittels zweier in der Ebene senkrecht zur optischen Achse angeordneter Drahtfedern (3) an die Kathode einer Bildaufnahmeröhre, z.B. einer Bildverstärker-, Bildwandler- oder Videoröhre, angepresst. Zur Uebertragung der Federkräfte sind zwei Bolzen (4) vorgesehen, welche an einer Halterung (2) des Trägers (1) befestigt und in teilweise kegelförmig ausgestalteten Oeffnungen einer Befestigungsplatte (5) geführt sind. Dadurch ist eine Kippbewegung des Trägers (1) möglich, so dass dieser auf der Kathodenoberfläche optimal aufliegt. Eine Befestigungsplatte (5) und eine Justierplatte (12) sind mittels je einer Justiereinrichtung (6,7,8) in je eine Richtung verschiebbar. Zur Fixierung derselben in einer bestimmten Position können Rasteinrichtungen (14,15) vorgesehen werden. Die Vorrichtung beansprucht wenig Platz und ermöglicht mit einfachen Mitteln eine Justierung der Bezugsmarke am Gerät selbst. Ausserdem kann die Bezugsmarke mit einfachen Mitteln ausgewechselt werden.

Fig. 1

## Vorrichtung zum Einbringen einer Bezugsmarke in den Strahlengang von optischen Systemen mit Bildaufnahmeröhren

Die vorliegende Erfindung betrifft eine Vorrichtung zum Einbringen einer Bezugsmarke in den Strahlengang eines optischen Systems mit einer Bildaufnahmeröhre.

Bei optischen Geräten, die der Beobachtung, der Vermessung oder als Zielhilfe dienen, besteht in vielen Fällen die Notwendigkeit, dem beobachteten Bildfeld eine Bezugsmarke zu überlagern. Für optische Systeme mit Bildaufnahme-Röhren, z.B. mit Bildverstärker-, Bildwandler- oder Videoröhren, sind zwei Lösungen für das Einbringen von Bezugsmarken bekannt.

Gemäss einer ersten Lösung wird die Bezugsmarke in die Bildebene des Hauptobjektivs mittels einer Hilfsoptik hineinprojiziert. Nachteilig an dieser Lösung ist der relativ grosse Aufwand, der Platzbedarf sowie die Notwendigkeit, die Lichtstärke der Leuchtmarke den gegebenen Verhältnissen anzupassen. Ausserdem ist bei der bekannten Lösung die Justiermöglichkeit beschränkt und eine Linearität der Justierung nicht gewährleistet.

Gemäss einer zweiten Lösung wird die Bezugsmarke direkt auf dem Eingangsfenster der Röhre vorgesehen. Ein Nachteil dieser Lösung ist es, dass die Bezugsmarken nur zusammen mit der Bildaufnahme-Röhre ausgetauscht werden können. Zudem ist bei Zielgeräten von Schiesseinrichtungen eine Justierung nur durch eine Verstellung der Lage des Zielgerätes relativ zur Schiesseinrichtung möglich. Da hier grosse Anforderungen an die Präzision gestellt sind, erfordert eine derartige Verstelleinrichtung einen erheblichen Aufwand.

Hier will die Erfindung Abhilfe schaffen. Die Erfindung, wie sie in den Ansprüchen gekennzeichnet ist, löst die Aufgabe, eine Vorrichtung zum Einbringen von Bezugsmarken in den Strahlengang eines optischen Gerätes mit einer Bildaufnahmeröhre zu schaffen, welche wenig Platz beansprucht und bei welcher die Marke ohne grossen Aufwand ausgewechselt und eine Justierung mit einfachen Mitteln am Gerät selbst vorgenommen werden kann.

- 2 -

Im folgenden wird die Erfindung anhand einer Zeichnung beispielsweise näher erläutert. Es zeigt:

Fig. 1 eine Ansicht der Vorrichtung von oben

Fig. 2 eine Ansicht der Vorrichtung von der Seite

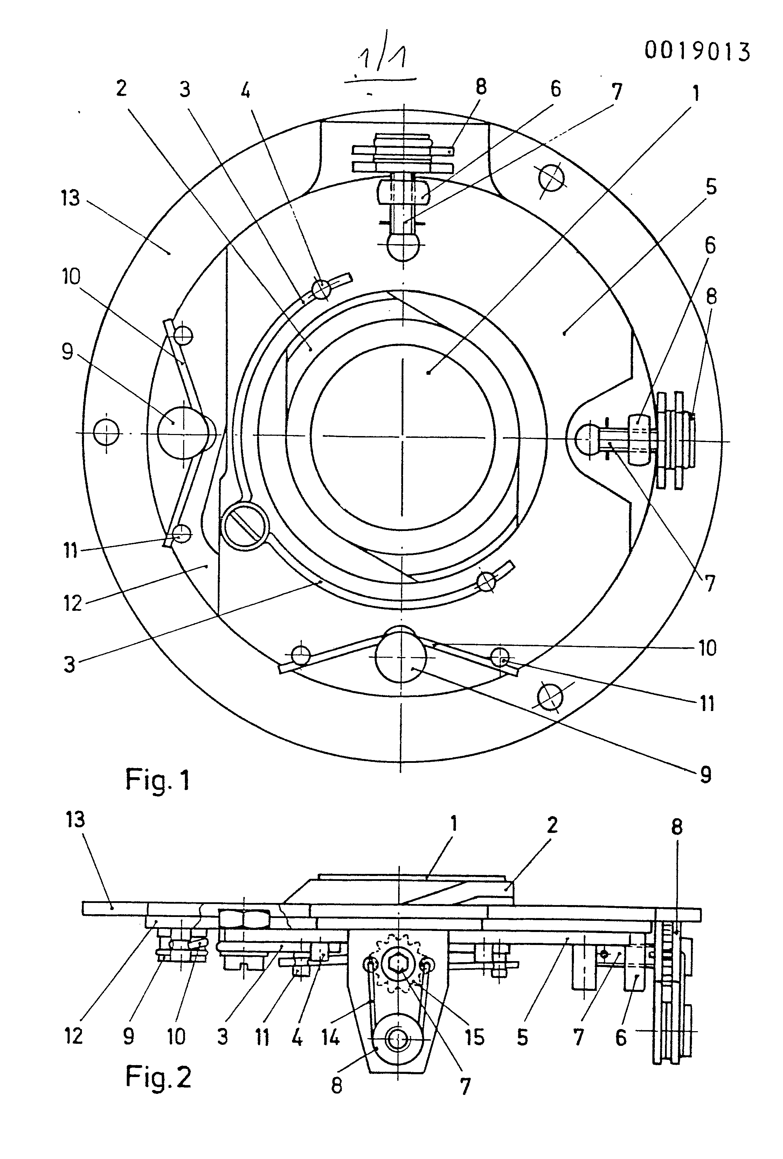

Wie aus Fig. 1 und 2 ersichtlich, ist eine mit einer Bezugsmarke (z.B. ein Fadenkreuz) versehene planparallele, transparente Scheibe 1 als Träger der Bezugsmarke in einer Halterung 2 befestigt. Zwei Halterungsbolzen 4 verbinden die Halterung 2 mit Drahtfedern 3, welche mit einer Schraube auf einer Befestigungsplatte 5 montiert sind. Die Halterungsbolzen 4 sind durch zwei in der Befestigungsplatte 5 befindliche Führungslöcher geführt. In der gezeigten Vorrichtung, in welcher die Bezugsmarke justierbar sein soll, ist die Befestigungsplatte justierbar ausgebildet und auf einer Justierplatte 12 geführt, wodurch eine Verschiebung des Fadenkreuzes in einer ersten Richtung ermöglicht wird. Die Justierplatte 12 ist auf einer Führungsplatte 13 geführt, wodurch eine Verschiebung des Fadenkreuzes in einer zweiten Richtung ermöglicht wird. An der Justierplatte 12 und der Führungsplatte 13 ist je eine Halterung 8 angebracht. Diese enthält eine Justierschraube 7, welche in die Gewindebohrung eines an der Befestigungsplatte 5 bzw. Justierplatte 12 befestigten Justiernockens 6 greift. Durch eine Drehbewegung der Schraube 7 kann die Befestigungsplatte 5 bzw. die Justierplatte 12 in Richtung der Schraubenachse in die gewünschte Position gebracht werden. Die Befestigungsplatte 5 bzw. die Justierplatte 12 sind mit je zwei Druckbolzen 11 versehen, gegen welche je zwei Drahtfedern 10 einen Druck ausüben. Dadurch wird die Schraube 7 bezüglich des Justiernockens 6 trotz unvermeidlichem Spiel des Gewindes in einer definierten Lage gehalten. Die Drahtfedern 10 umschlingen jeweils einen Federbolzen 9. Der eine Federbolzen 9 ist auf der Justierplatte 12, der andere Federbolzen 9 auf der Führungsplatte 13 angebracht.

Die dargestellte Vorrichtung funktioniert folgendermassen: Die Drahtfedern 3 üben einen Druck auf die Halterungsbolzen 4 aus. Die Halterung 2 nimmt diesen Druck auf und überträgt ihn auf die die Bezugsmarke enthaltende planparallele transparente Scheibe 1. Diese wird an die Kathode einer Bildverstärkerröhre gepresst. Da die Kathode zwar plan ist, jedoch bezüglich des Winkels ihrer Oberfläche zur optischen Achse Toleranzen aufweist, muss die transparente Scheibe 1 ihre Stellung diesem Winkel anpassen können. Die Kippbewegung bezüglich einer ersten radialen Mittelachse wird durch die besondere Ausgestaltung der Führungslöcher in der Befestigungsplatte 5 und bezüglich einer zweiten radialen Mittelachse senkrecht dazu dadurch ermöglicht, dass die Federkräfte der Drahtfedern 3 unabhängig voneinander wirken. Ein erster Abschnitt der Führungslöcher ist zylindrisch und gewährleistet einen sauberen Halt der transparenten Scheibe 1. Der zweite Abschnitt des Führungsloches weitet sich gegen die gegen die Halterung gerichtete Oeffnung hin kegelförmig aus. Dadurch wird die Kippbewegung bezüglich der ersten radialen Mittelachse ermöglicht.

Infolge der Luftschicht zwischen der transparenten Scheibe 1 und der Kathode der Bildverstärkerröhre können durch Lichtreflexionen Interferenzstreifen (sog. Newton'sche Ringe) entstehen. Das Auftreten dieses Effektes kann mit einer dazwischenliegenden Oelschicht, welche vorzugsweise aus Paraffinöl besteht, verhindert werden.

Die Länge der Drahtfedern 3 bewirkt eine gleichbleibende Federkraft über einen langen Federweg und verhindert, dass die transparente Scheibe 1 in irgendeiner Stellung einen unzulässig hohen Druck auf die Kathode ausübt. Ausserdem benötigen die Drahtfedern 3 durch die Anordnung parallel zur Befestigungsplatte 5 trotz des langen Federweges ein Minimum an Raum in axialer Richtung. Dieser Raum ist sehr beschränkt, denn im Interesse eines möglichst kompakten, kurzen Gerätes ist die Lage des Brennpunktes der Linsenoptik möglichst nahe bei der letzten Linse zu wählen.

In Fig. 2 ist ein Rastgetriebe gezeigt, welches aus einem Rastrad 15 und zwei miteinander verbundenen und L-förmige Enden aufweisenden Drahtfedern 14 besteht und welches die Justierschraube 7 in bestimmten Positionen hörbar einrasten lässt. Dies ist bei Zielvorrichtungen vorteilhaft. Die Raststellungen geben Anhaltspunkte für das Einschiessen. Einer Drehung der Justierschraube um einen bestimmten Rastwinkel entspricht relativ zur Schussrichtung gesehen eine Verschiebung der Befestigungsplatte 5 bzw. der Justierplatte 12 und damit des Fadenkreuzes um einen bestimmten Betrag in eine definierte Richtung. Einer infolge Abweichung des Einschusspunktes vom anvisierten Zielpunkt gegebenenfalls auftretenden Fehldistanz in dieser Richtung kann eine bestimmte Anzahl

- 4 -

Rastwinkel zugeordnet werden. Der Träger 1 für die Bezugsmarke muss nicht planparallel ausgebildet sein. Er kann beispielsweise auch entsprechend einer sphärisch geformten Kathode ausgestaltet werden.

Patentansprüche

1. Vorrichtung zum Einbringen einer Bezugsmarke in den Strahlengang eines optischen Systems mit einer Bildaufnahmeröhre, dadurch gekennzeichnet, dass die Bezugsmarke auf einem transparenten Träger (1) aufgebracht ist, der an die Kathode der Bildaufnahmeröhre gepresst wird.

2. Vorrichtung nach Anspruch 1, dadurch gekennzeichnet, dass der Träger (1) mittels in einer Ebene senkrecht zur optischen Achse angeordneter Drahtfedern (3) an die Kathode der Bildaufnahmeröhre angepresst wird, und dass zur Uebertragung des Druckes der Drahtfedern (3) zwei Bolzen (4) vorgesehen sind, welche an einer Halterung (2) des Trägers (1) befestigt und in teilweise kegelförmig ausgestalteten Oeffnungen einer Befestigungsplatte (5) geführt sind.

3. Vorrichtung nach Anspruch 1 oder 2, dadurch gekennzeichnet, dass der Träger (1) mit einer justierbaren Befestigungsplatte (5) verbunden ist bzw. die Befestigungsplatte (5) justierbar ist, und dass die Befestigungsplatte (5) auf einer Justierplatte (12) in einer ersten Richtung und die Justierplatte (12) auf einer Führungsplatte (13) in einer zweiten Richtung verschiebbar ist.

4. Vorrichtung nach Anspruch 3, dadurch gekennzeichnet, dass zur Verschiebung der justierbaren Befestigungsplatte (5) und der Justierplatte (12) je eine Justiereinrichtung vorgesehen ist, die eine Justierschraube (7) aufweist, welche in eine Gewindebohrung eines auf der justierbaren Befestigungsplatte (5) bzw. der Justierplatte (12) befestigten Justiernockens (6) greift und denselben bei Drehung der Justierschraube (7) in der Richtung der Schraubenachse bewegt.

5. Vorrichtung nach Anspruch 4, dadurch gekennzeichnet, dass zur Fixierung der justierbaren Befestigungsplatte (5) bzw. der Justierplatte (12) in einer bestimmten Position die beiden Justiereinrichtungen mit je einer Rasteinrichtung versehen sind, die ein zahnradförmiges Rastrad (15) sowie ein L-förmig ausgebildetes Ende wenigstens einer Drahtfeder (14) als Rastnocken aufweisen.

0019013

Fig. 1

Fig. 2